(19) Europäisches Patentamt
European Patent Office
Office européen des brevets

(11) **EP 2 615 901 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(21) Anmeldenummer: **11748310.7**

(22) Anmeldetag: **25.07.2011**

(51) Int Cl.:
*A01B 79/00* ^(2006.01)   *A01C 21/00* ^(2006.01)
*A01C 7/10* ^(2006.01)

(86) Internationale Anmeldenummer:
**PCT/EP2011/062732**

(87) Internationale Veröffentlichungsnummer:
**WO 2012/034754 (22.03.2012 Gazette 2012/12)**

(54) **VERFAHREN ZUM AUSBRINGEN VON LANDWIRTSCHAFTLICHEN STOFFEN IN KURVEN**

METHOD FOR APPLYING AGRICULTURAL SUBSTANCES IN CURVES

PROCÉDÉ D'ÉPANDAGE DE PRODUITS AGRICOLES DANS LES COURBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2010 DE 102010045189**

(43) Veröffentlichungstag der Anmeldung:
**24.07.2013 Patentblatt 2013/30**

(73) Patentinhaber: **Lacos Computerservice GmbH**
**07937 Zeulenroda-Triebes (DE)**

(72) Erfinder:
• **DAMME, Bernd**
**07937 Langenwolschendorf (DE)**
• **DAMME, Thomas**
**07937 Zeulenroda-Triebes (DE)**

(74) Vertreter: **Kruspig, Volkmar et al**
**Meissner Bolte Patentanwälte**
**Rechtsanwälte Partnerschaft mbB**
**Berliner Straße 1**
**07545 Gera (DE)**

(56) Entgegenhaltungen:
**EP-A1- 1 415 523     WO-A1-2011/025592**
**US-A1- 2003 159 633     US-A1- 2006 086 295**

**Beschreibung**

Die Erfindung betrifft ein Verfahren zum Ausbringen von landwirtschaftlichen Stoffen in Kurven mittels Bestimmung von Ausbring-Sollmengen von Einzelausbringvorrichtungen einer Ausbringeinheit zum Ausbringen landwirtschaftlicher Stoffe, gemäß Patentanspruch 1 sowie ein Verfahren zum Ausbringen von landwirtschaftlichen Stoffen in Kurven mittels näherungsweiser Bestimmung von Ausbring-Sollmengen von Einzelausbringvorrichtungen einer Ausbringeinheit zum Ausbringen landwirtschaftlicher Stoffe, gemäß Patentanspruch 7.

Bei landwirtschaftlichen Maschinen ist es üblich, die Ausbringmenge von landwirtschaftlichen Stoffen wie z. B. Dünger oder Pflanzenschutzmittel gemäß einer jeweils zu befahrenden Teilfläche zu regeln und auszubringen. Dabei wird über die gesamte Breite der Maschine die gleiche Menge an landwirtschaftlichen Stoffen ausgebracht.

Die US 2006/0086295 A1 offenbart ein Verfahren für eine Steuerung einer Reihenrate eines landwirtschaftlichen Gerätes zum Einstellen des Volumens eines zugeführten Düngers oder Wuchsstoffes bei großen Geräten in unregelmäßig geformten oder begrenzten chemisch behandelten, bepflanzten oder besäten Flächen. Gemäß der dort offenbarten Lehre wird die Position bzw. die Geschwindigkeit jedes Arbeitsabschnitts des landwirtschaftlichen Gerätes ermittelt und daraufhin gesteuert.

Die EP 1 415 532 A1 offenbart eine Sämaschine. Gegenstand der dort enthaltenen Lehre ist eine Sämaschine, mit der sich ein vorgegebenes Säbild realisieren lässt. Es werden dort die Position jedes einzelnen Säaggregates wie auch die Position benachbarter Säaggregate untereinander bestimmt.

Die US 2003/0159633 A1) beschreibt ein Verfahren und eine Anordnung für ein hochgenaues GPS-basiertes Kartieren von Saaten oder Vegetation während des Vorgangs der Aussaat.

Beim Befahren einer Kurve bzw. beim Drehen der landwirtschaftlichen Maschinen ergeben sich bzgl. der kurveninneren Teilbreiten jedoch wesentlich kleinere Kurvengeschwindigkeiten als bei den kurvenäußeren Teilbreiten. Infolge dessen wird im kurveninneren Bereich der zu bearbeitenden Fläche mehr und oftmals zu viel landwirtschaftliches Material ausgebracht als im kurvenäußeren Bereich der zu bearbeitenden Fläche.

Aus dem Vorgenannten ist es daher Aufgabe der vorliegenden Erfindung, ein Verfahren zum Ausbringen von landwirtschaftlichen Stoffen anzugeben, welches für ein gleichmäßiges Ausbringen von beispielsweise Düngemitteln oder Pflanzenschutzmitteln Sorge trägt. Über- und Unterbehandlungen, welche Pflanzenschäden oder eine nicht ausreichende Bekämpfung von Unkräutern zur Folge haben, sollen mit dem erfindungsgemäßen Verfahren vermieden werden.

Die Lösung der Aufgabe erfolgt mit Hilfe eines Verfahrens zum Ausbringen von landwirtschaftlichen Stoffen in Kurven mittels Bestimmung von Ausbring-Sollmengen von Einzelausbringvorrichtungen einer Ausbringeinheit zum Ausbringen landwirtschaftlicher Stoffe, gemäß Patentanspruch 1 sowie durch ein Verfahren zum Ausbringen von landwirtschaftlichen Stoffen in Kurven mittels näherungsweiser Bestimmung von Ausbring-Sollmengen von Einzelausbringvorrichtungen einer Ausbringeinheit zum Ausbringen landwirtschaftlicher Stoffe, gemäß Patentanspruch 7, wobei die Unteransprüche mindestens zweckmäßige Ausgestaltungen und Weiterbildungen darstellen.

Erfindungswesentlich sind verfahrensseitig folgende Schritte:
Erfindungsgemäß sieht das Verfahren zunächst ein Befahren einer landwirtschaftlichen Nutzfläche mit einem landwirtschaftlichen Fahrzeug mit einer Ausbringeinheit vor, wobei die Ausbringeinheit mindestens zwei Einzelausbringvorrichtungen aufweist.

Es erfolgt ein Erkennen des Befahrens einer Kurve mit dem landwirtschaftlichen Fahrzeug über einen Sensor oder über ein Aufnahmegerät.

Es erfolgt weiterhin eine Bestimmung und Berechnung des zu befahrenden Kurvenradius des Fahrzeugmittelpunktes über das Erfassen des Lenkwinkels oder durch Beschleunigungssensoren oder Gyro.

Es erfolgt eine Bestimmung der Kurvenradien jeder Einzelausbringvorrichtung aus dem Kurvenradius des Fahrzeugmittelpunktes und einem Offset oder Abstand zwischen dem Fahrzeugmittelpunkt und dem Mittelpunkt der Ausbringeinheit und dem Offset oder Abstand zwischen dem Mittelpunkt der Ausbringeinheit und der Einzelausbringvorrichtung.

In Verbindung damit erfolgt eine Bestimmung der Ausbring-Sollmenge einer Einzelausbringvorrichtung anhand einer vor dem Bearbeiten einer landwirtschaftlichen Fläche bestimmten oder berechneten Ausbring-Sollmenge des landwirtschaftlichen Fahrzeuges.

Die Bestimmung der Ausbring-Sollmenge erfolgt außerdem anhand der Kurvenradienwerte der Einzelausbringvorrichtung und des Fahrzeugmittelpunktes und durch ein Eingeben der bestimmten/berechneten Ausbring_Sollmenge SA in eine Rechenmaschine des Fahrzeugs und die automatische Regelung durch die Rechenmaschine der Ausbring-Sollmenge an der Ausbringeinheit.

Es sei zunächst darauf hingewiesen, dass es sich bei dem auszubringenden landwirtschaftlichen Stoffen beispielsweise um Düngemittel, Pflanzenschutzmittel aber auch Pflanzensamen handeln kann. Die Ausbringung erfolgt mit entsprechend geeigneten landwirtschaftlichen Maschinen, wie z. B. einem Düngerstreuer, Pflanzenschutzspritzen oder einem Güllewagen.

Es existieren viele technische Einrichtungen an landwirtschaftlichen Maschinen, um Stoffe auszubringen. Dies sind unter anderem Düsen, Schläuche oder Schleuderteller, welche im Folgenden unter dem Begriff Einzelausbringvorrichtung zusammengefasst werden. Bei der Ausbringeinheit handelt es sich also beispielsweise um einen Düngerstreuer, wobei die Einzelausbringvorrichtung einen einzelnen Schleuderteller darstellt.

Des Weiteren kann es aber auch denkbar sein, mehrere Düsen zu einer Ausbring-Teileinheit zusammenzufassen. So können beispielsweise alle kurveninnenliegenden Düsen mit der gleichen Ausbring-Sollmenge beaufschlagt werden und alle kurvenaußenliegenden Düsen geben ebenfalls die gleiche Menge an dem auszubringenden Gut ab. Die abzugebende Menge der kurveninnenliegenden und der kurvenaußenliegenden Düsen unterscheiden sich jedoch in dieser Ausführung voneinander.

Beim Befahren der landwirtschaftlichen Nutzfläche wird zunächst erkannt, ob die landwirtschaftliche Maschine eine Kurve fährt bzw. wendet. Dieses Erkennen erfolgt mittels geeigneter Sensoren oder Aufnahmegeräten.

Es folgt die Bestimmung des zu befahrenden Kurvenradius des Fahrzeugmittelpunktes, wobei es mehrere Methoden zur Bestimmung des Radius gibt. Zunächst ist es denkbar, den Lenkwinkel der landwirtschaftlichen Maschine zu ermitteln und auf Grundlage des Wertes den Kurvenradius zu berechnen. Außerdem ist es möglich durch Beschleunigungssensoren bzw. Kreisel oder Gyro den Kurvenradius des Fahrzeugmittelpunktes zu berechnen.

Weitere Möglichkeiten sind die Analyse von GPS-Daten. Da bereits eine große Anzahl moderner landwirtschaftlicher Maschinen mit GPS-Empfangs und Sendesystemen ausgestattet sind und Abweichungen von geraden Fahrspuren erkannt und in Kurvenradien umgerechnet werden können. Eine Analyse der Position einer Soll-Spur bzw. Abweichungen von dieser Soll-Spur können auch zur Bestimmung des Radius beitragen.

Da es bereits weit verbreiteter Stand der Technik ist, dass mehrere landwirtschaftliche Maschinen in Kommunikation zueinander stehen, kann diese Tatsache dazu genutzt werden, Daten bzgl. Kurvenradien in bestimmten Teilbereichen einer landwirtschaftlich zu bearbeitenden Fläche zwischen den landwirtschaftlichen Maschinen zu kommunizieren.

Des Weiteren ist es vorgesehen Knickwinkel einzelner Maschinenteile eines landwirtschaftlichen Fahrzeuges beim Befahren einer Kurve zu ermitteln und in einen exakten Kurvenradius umzurechnen. Derartige Knickwinkel treten beispielsweise bei Traktor-Anhänger-Gespannen auf. Es sei darauf hingewiesen, dass die soeben genannten Methoden zur Bestimmung des Kurvenradius des Fahrzeugmittelpunktes wahlweise miteinander kombiniert werden können.

Eine Analyse mehrere aufgrund unterschiedlicher Methoden bestimmter Radien und die Bildung eines Mittelwertes sorgt für einen besonders exakt bestimmten Kurvenradius. Dies ist insofern von Wichtigkeit, als dass dieser bestimmte Wert Grundlage für nachfolgend zu bestimmende Werte wie Kurvenradius der Einzelausbringvorrichtung, relative Geschwindigkeit der Einzelausbringvorrichtung und letztendlich die Ausbring-Sollmenge jeder Einzelausbringvorrichtung ist. Nach Bestimmung des Kurvenradius des Fahrzeugmittelpunktes folgt die Bestimmung der Kurvenradien jeder Einzelausbringvorrichtung der Ausbringeinheit. Hierzu wird mittels Einbeziehung des Radius des Fahrzeugmittelpunktes sowie der Werte bzgl. "dem Offset/Abstand zwischen dem Fahrzeugmittelpunkt und dem Mittelpunkt der Ausbringeinheit" und bzgl. "dem Offset/Abstand zwischen dem Mittelpunkt der Ausbringeinheit und der Einzelausbringvorrichtung" der Kurvenradius für jede Einzelausbringvorrichtung beschrieben.

Da die Winkel- oder Rotationsgeschwindigkeit am Mittelpunkt des landwirtschaftlichen Fahrzeuges und an der Position der Einzelausbringvorrichtung gleich sind kann die Geschwindigkeit (Bahngeschwindigkeit) der Einzelausbringvorrichtung anhand der Fahrzeuggeschwindigkeit und des Kurvenradius des Fahrzeugmittelpunktes sowie der jeweiligen Kurvenradien der Einzelausbringvorrichtung bestimmt bzw. berechnet werden. Dies erfolgt durch einfache Gleichungsaufstellung.

Letztendlich folgt die Bestimmung der Ausbring-Sollmenge jeder Einzelausbringvorrichtung beim Befahren einer Kurve auf Grundlage der Bahngeschwindigkeit der Einzelausbringvorrichtung und der Ausbring-Sollmenge des landwirtschaftlichen Fahrzeuges, wobei die letztgenannte Ausbring-Sollmenge vor Bearbeitung der landwirtschaftlichen Fläche bestimmt wird. Das bedeutet die Menge an beispielsweise Dünge- oder Pflanzenschutzmitteln, welche in einem bestimmten Zeitabschnitt auf einer Teilbreite des Feldes ausgestreut werden soll, wird beispielsweise auf Grundlage von Erfahrungswerten des Landwirtes, oder von Berechnungen und Vorgabekarten bestimmt und in eine Rechenmaschine des Fahrzeuges eingegeben. Der Computer regelt die Ausbring-Sollmenge an der Ausbringeinheit.

Des Weiteren ist die Bestimmung der Ausbring-Sollmenge jeder Einzelausbringvorrichtung anhand der gesamten Ausbring-Sollmenge des landwirtschaftlichen Fahrzeuges und lediglich der Kurvenradienwerte der Einzelausbringvorrichtung und des Fahrzeugmittelpunktes möglich.

Sofern eine genaue Bestimmung bzw. Berechnung des Kurvenradius des landwirtschaftlichen Fahrzeuges nicht möglich sein sollte, kann dieser auf Grundlager nachfolgend genannter Verfahren auch näherungsweise geschätzt bzw. bestimmt werden. Die Schätzung ergibt die Kurvenrichtung sowie den Grad der Kurvenstärke. Kurvenstärke kann in diesem Zusammenhang derart verstanden werden, dass aufgrund der Schätzung eine Aussage darüber getroffen werden kann, ob es sich bei der zu befahrenden Kurve um eine "flache oder steile" Kurve handelt.

Erfindungswesentlich ist insbesondere dabei, dass die näherungsweise Bestimmung auf Grundlage von Beschleunigungssensoren und/oder Kreisel und/oder Gyro und/oder auf Grundlage einer Analy-se von GPS-Daten und/oder auf Grundlage einer Analyse der Positionen einer Soll-Spur, welche das landwirtschaftliche Fahrzeug zurücklegen soll, und/oder durch Übermittlung von Graddaten der Kurvenstärke anderer Recheneinheiten oder Sensoren und/oder auf Grundlage von übermittelten Knickwinkeln zwi-schen Maschinenteilen erfolgt und und eine näherungsweise Bestimmung der Ausbring-Sollmengen SA der Einzelausbringvorrichtungen auf Grundlage der näherungsweise bestimmten Kurven-stärke erfolgt. Es erfolgt ein Eingeben der bestimmten/berechneten Ausbring-Sollmenge der Einzelausbringvorrichtung in eine Rechenmaschine des Fahrzeugs, und automatische Regelung durch die Rechenmaschine der Ausbring-Sollmenge an der Ausbringeinheit.

Die näherungsweise Bestimmung kann mit Hilfe von Beschleunigungssensoren und/oder Winkelmessern und/oder Gyro und/oder Kreisel erfolgen. Auch eine, wie bereits beschrieben, Analyse von GPS-Daten oder Analyse der Positionen oder Abweichungen von einer Soll-Spur kann Grundlage einer Schätzung bzgl. der Kurvenstärke sein.

Eine Übermittlung des Grades der Kurvenstärke von einer anderen Recheneinheit, landwirtschaftlichen Maschine oder von anderen Sensoren kann ebenso wie die Erfassung und die darauf erfolgende Berechnung aus Knickwinkeln zwischen Maschinenteilen zur Schätzung der Kurvenstärke herangezogen werden.

Die Kombination und Mittelwertbildung mehrerer Schätzungsmethoden ist möglich und vorzugsweise anzuwenden.

Zum einen ist es möglich, den näherungsweise bestimmten Grad der Kurvenstärke zur Bestimmung der Kurvenstärke bzw. des Kurvenradius der Einzelausbringvorrichtung heranzuziehen und daraus die Geschwindigkeit (Bahngeschwindigkeit) bzgl. der Einzelausbringvorrichtung zu bestimmen und anschließend die jeweilige Ausbring-Sollmenge zu berechnen.

Zum anderen kann der Grad der Kurvenstärke direkt in die Bestimmung bzw. Berechnung des Minderungs- oder Erhöhungsquotienten für die Ausbring-Sollmenge der Einzelausbringvorrichtung mit einbezogen werden.

In einer besonders bevorzugten Ausführungsform werden die berechneten bzw. ermittelten Ausbring-Sollmengen der Einzelausbringvorrichtungen über einen bestimmten Zeitraum hinweg gemittelt. Die Mittelwertbildung sorgt für einen Ausgleich von Schwankungen. Das Ergebnis kann direkt in der Recheneinheit des landwirtschaftlichen Fahrzeuges verarbeitet werden oder aber an eine andere Recheneinheit oder einen anderen Maschinenteil übermittelt werden. Auch die Hinterlegung der ermittelten Mittelwerte in einer Datenbank ist denkbar.

Die Regelung der Ausbring-Sollmenge einer Einzelausbringvorrichtung, also die automatische Abgabe der bestimmten, berechneten oder näherungsweise bestimmten Ausbring-Sollmengen, erfolgt über eine Verteileinheit, wobei Einzelausbringvorrichtungen, welche im kurvenäußeren Bereich liegen, eine höhere Ausbring-Sollmenge als Einzelausbringvorrichtungen, welche im kurveninneren Bereich liegen, zugeordnet ist. Im Idealfall muss eine Druckbeaufschlagung oder Beaufschlagung mit der Gesamtmenge an auszubringendem Material nicht geändert werden, wenn eine Reduzierung auf der kurveninneren Einzelausbringvorrichtung eine Erhöhung auf der kurvenäußeren Einzelausbringvorrichtung entspricht.

Die Abgabe bzw. Reglung der richtigen Ausbring-Sollmenge an der jeweiligen Einzelausbringvorrichtung erfolgt durch Schieberegler, Durchmesserveränderliche Düsen etc. und entsprechender Volumenflussverkleinerung oder Volumenflussvergrößerung. Des Weiteren sind auch Intervallschaltungen der jeweiligen Einzelausbringvorrichtungen möglich.

Sofern beispielsweise eine Düse in der Lage ist, sehr schnell ab- und einzuschalten, kann in Intervallen die Düse kurz abgeschaltet werden, um eine Reduzierung der Austragsmenge zu erreichen. Eine Erhöhung der Ausbring-Menge auf der kurvenäußeren Seite der Ausbringeinheit kann dadurch erreicht werden, indem der Gesamtdruck in der Verteileinheit entsprechend der höchsten Ausbring-Sollmenge erhöht wird und alle Einzelausbringvorrichtungen mit kleineren Ausbring-Sollmengen, diese über Intervallschaltungen von Düsen etc. abgeben.

Sollte eine der beschriebenen Bestimmungen, Berechnungen, Approximationen bzw. näherungsweisen Berechnungn für eine Einzelausbringvorrichtung eine Geschwindigkeit von 0 oder eine negative Geschwindigkeit ermitteln, kann dies als Hinweis genutzt werden, diese Einzelausbringvorrichtung abzuschalten. Somit werden Doppelapplikation mit Dünge- oder Pflanzenschutzmittel vermieden.

Die Erfindung soll nachstehend anhand eines Ausführungsbeispiels sowie unter Zuhilfenahme einer Figur näher erläutert werden.

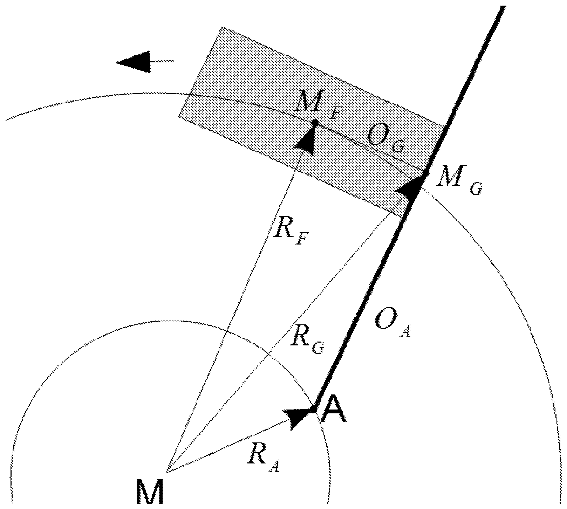

Hierbei zeigt die Figur eine schematische Darstellung einer Kurvenfahrt einer landwirtschaftlichen Maschine mit der Ausbringeinheit und einer auf der Ausbringeinheit befindlichen Einzelausbringvorrichtung A. In der schematischen Figur ist aus Gründen der einfachen Darstellung lediglich eine Einzelausbringvorrichtung am kurveninnersten Punkt der Ausbringvorrichtung dargestellt, tatsächlich befinden sich auf einer derartigen Ausbringvorrichtung immer mindestens zwei Einzelausbringvorrichtungen.

Vor der Bestimmung der Ausbring-Sollmenge $S_A$ der jeweiligen Einzelausbringvorrichtungen erfolgt die Bestimmung der vollständigen Ausbring-Sollmenge $S_F$ des Fahrzeuges. Diese Bestimmung erfolgt nach Erfahrungswerten, Berechnung oder Vorgabekarte.

Zunächst ist eine gerade Bearbeitung der landwirtschaftlichen Nutzfläche, welche in Teilbreiten eingeteilt ist, vorgesehen. Sobald die landwirtschaftliche Maschine in eine Kurve einlenkt, oder die in einer Rechnereinheit vorgegebene Applikationskarte das Befahren einer Kurve vorsieht, wird dies von einem System erkannt.

Nach dem Erkennen des Befahrens oder bevorstehenden Befahrens einer Kurve folgt die Bestimmung des zu befahrenden Kurvenradius $R_F$ des Fahrzeugmittelpunktes. Dieser kann beispielsweise durch den Lenkwinkel der landwirtschaftlichen Maschine ermittelt werden. Außerdem ist es möglich durch Beschleunigungssensoren bzw. Kreisel oder Gyro den Kurvenradius des Fahrzeugmittelpunktes zu berechnen. Weitere Möglichkeiten sind die Analyse von GPS-Daten. Nach Ermittlung des Kurvenradius $R_F$ des Fahrzeugmittelpunktes kann gemäß nachfolgender Formel der Radius $R_A$ jeder Einzelausbringvorrichtung bestimmt werden:

$$R_A = \sqrt{(R_F - O_A)^2 + O_G^2}$$

Da die Winkelgeschwindigkeit am Mittelpunkt des landwirtschaftlichen Fahrzeuges $M_F$ der Winkelgeschwindigkeit an der Position der Einzelausbringvorrichtung A entspricht, berechnet sich die Geschwindigkeit (Bahngeschwindigkeit) $V_A$ der Einzelausbringvorrichtung anhand der Fahrzeuggeschwindigkeit $V_F$ wie folgt:

$$V_A = \frac{V_F}{R_F} \cdot R_A$$

Die Berechnung/Bestimmung der Ausbring-Sollmenge $S_A$ einer Einzelausbringvorrichtung anhand der Gesamt-Sollmenge $S_F$ erfolgt nach

$$S_A = \frac{S_F}{R_A} \cdot R_F$$

oder

$$S_A = \frac{S_F}{V_A} \cdot V_F$$

Es wird sich eine Verteilung der Ausbring-Sollmengen $S_A$ der Einzelausbringvorrichtungen ergeben, wonach der Betrag der Sollmenge im kurveninneren Bereich der Ausbringeinheit niedriger als im kurvenäußeren Bereich ist.

Zusammenfassend liegt der Vorteil des beschriebenen Verfahrens darin, dass auch in Kurven jede Flächeneinheit einer landwirtschaftlichen Fläche mit der richtigen Menge behandelt wird. Eine gleichmäßige Dünger oder Pflanzenschutzmittelverteilung ist die Folge, sodass in keinen Bereichen chemische Übersättigungen oder mengenmäßig unzureichende Versorgen auftreten können.

<div align="center">Abkürzungsverzeichnis:</div>

| | |
|---|---|
| $M_F$ | Mittelpunkt des landwirtschaftlichen Fahrzeuges |
| $M_G$ | Mittelpunkt der Ausbringeinheit |
| A | Position einer Einzelausbringvorrichtung der Ausbringeinheit |
| M | Kurvenmittelpunkt |
| $R_F$ | Radius des landwirtschaftlichen Fahrzeuges |
| $R_G$ | Radius der Ausbringeinheit |
| $R_A$ | Radius einer Einzelausbringvorrichtung der Ausbringeinheit |
| $O_G$ | Offset der Ausbringeinheit vom Fahrzeugmittelpunkt |
| $O_A$ | Offset einer Einzelausbringvorrichtung vom Mittelpunkt der Ausbringeinheit |
| $V_A$ | Geschwindigkeit der Einzelausbringvorrichtung |
| $V_F$ | Geschwindigkeit des landwirtschaftlichen Fahrzeuges |
| $S_A$ | Ausbring-Sollmenge der Einzelausbringvorrichtung |

(fortgesetzt)

| $S_F$ | Ausbring-Sollmenge des landwirtschaftlichen Fahrzeuges |
|---|---|

**Patentansprüche**

1. Verfahren zum Ausbringen von landwirtschaftlichen Stoffen in Kurven mittels Bestimmung von Ausbring-Sollmengen von Einzelausbringvorrichtungen einer Ausbringeinheit zum Ausbringen landwirtschaftlicher Stoffe umfassend die Schritte

   - Befahren einer landwirtschaftlichen Nutzfläche mit einem landwirtschaftlichen Fahrzeug mit einer Ausbringeinheit, wobei die Ausbringeinheit mindestens zwei Einzelausbringvorrichtungen aufweist,
   - Erkennen des Befahrens einer Kurve mit dem landwirtschaftlichen Fahrzeug über geeignete Sensoren oder Aufnahmegeräten, **gekennzeichnet durch** die folgenden Schritte:
   - Bestimmung und Berechnung des zu befahrenden Kurvenradius ($R_F$) des Fahrzeugmittelpunktes ($M_F$) über das Erfassen des Lenkwinkels oder durch Beschleunigungssensoren oder Gyro,
   - Bestimmung der Kurvenradien ($R_A$) jeder Einzelausbringvorrichtung aus dem Kurvenradius des Fahrzeugmittelpunktes ($M_F$) und einem Offset oder Abstand ($O_G$) zwischen dem Fahrzeugmittelpunkt ($M_F$) und dem Mittelpunkt der Ausbringeinheit ($M_G$) und dem Offset oder Abstand ($O_A$) zwischen dem Mittelpunkt der Ausbringeinheit ($M_G$) und der Einzelausbringvorrichtung, und
   - Bestimmung der Ausbring-Sollmenge einer Einzelausbringvorrichtung anhand einer vor dem Bearbeiten einer landwirtschaftlichen Fläche bestimmten oder berechneten Ausbring-Sollmenge des landwirtschaftlichen Fahrzeuges, und anhand der Kurvenradienwerte ($R_F$, $R_A$) der Einzelausbringvorrichtung und des Fahrzeugmittelpunktes und durch ein Eingeben der bestimmten/berechneten Ausbring_Sollmenge in eine Rechenmaschine des Fahrzeugs und die automatische Regelung durch die Rechenmaschine der Ausbring-Sollmenge an der Ausbringeinheit.

2. Verfahren nach Anspruch 1,
   **dadurch gekennzeichnet, dass**
   nach Bestimmung der Kurvenradien ($R_A$) jeder Einzelausbringvorrichtung eine Bestimmung der relativen Geschwindigkeit jeder Einzelausbringvorrichtung anhand der Geschwindigkeit des landwirtschaftlichen Fahrzeuges und des Kurvenradius ($R_F$) des Fahrzeugmittelpunktes sowie der Kurvenradien ($R_A$) der jeweiligen Einzelausbringvorrichtung erfolgt, wobei die Geschwindigkeiten jeder Einzelausbringvorrichtung und des landwirtschaftlichen Fahrzeuges zur Bestimmung der Ausbring-Sollmenge $S_A$ einer Einzelausbringvorrichtung herangezogen werden.

3. Verfahren nach Anspruch 1 oder 2,
   **dadurch gekennzeichnet, dass**
   die Bestimmung des zu befahrenden Kurvenradius ($R_F$) des Fahrzeugmittelpunktes ($M_F$) auch auf Grundlage einer Analyse von GPS-Daten und/oder auf Grundlage einer Analyse der Positionen einer Soll-Spur, welche das landwirtschaftliche Fahrzeug zurücklegen soll, und/oder durch Übermittlung von Radiendaten anderer Recheneinheiten/Sensoren/landwirtschaftlicher Maschinen und/oder auf Grundlage von übermittelten Knickwinkeln zwischen Maschinenteilen erfolgt.

4. Verfahren nach einem der Ansprüche 1, 2 oder 3,
   **dadurch gekennzeichnet, dass**
   die Werte der bestimmten Ausbring-Sollmengen über einen definierten Zeitraum gemittelt werden.

5. Verfahren nach einem der Ansprüche 1 bis 4,
   **dadurch gekennzeichnet, dass**
   die Regelung der Ausbring-Sollmenge einer Einzelausbringvorrichtung über eine Verteileinheit erfolgt, wobei kurvenäußere Einzelausbringvorrichtungen einer größeren Ausbring-Sollmenge zugeordnet sind als kurveninnere Einzelausbringvorrichtungen.

6. Verfahren nach einem der Ansprüche 1 bis 5,
   **dadurch gekennzeichnet, dass**
   die Regelung der Ausbring-Sollmenge an der Einzelausbringvorrichtung durch Volumenflussverkleinerung oder -vergrößerung und/oder durch Intervallschaltung der Einzelausbringvorrichtung erfolgt.

**7.** Verfahren zum Ausbringen von landwirtschaftlichen Stoffen in Kurven mittels näherungsweiser Bestimmung von Ausbring-Sollmengen von Einzelausbringvorrichtungen einer Ausbringeinheit zum Ausbringen landwirtschaftlicher Stoffe,
umfassend die Schritte

- Befahren einer landwirtschaftlichen Nutzfläche mit einem landwirtschaftlichen Fahrzeug mit einer Ausbringeinheit, wobei die Ausbringeinheit mindestens zwei Einzelausbringvorrichtungen aufweist,
- Erkennen des Befahrens einer Kurve mit dem landwirtschaftlichen Fahrzeug,

**dadurch gekennzeichnet, dass**

- eine näherungsweise Bestimmung der zu befahrenden Kurvenstärke und Kurvenrichtung erfolgt,

wobei die näherungsweise Bestimmung auf Grundlage von Beschleunigungssensoren und/oder Kreisel und/oder Gyro und/oder auf Grundlage einer Analyse von GPS-Daten und/oder auf Grundlage einer Analyse der Positionen einer Soll-Spur, welche das landwirtschaftliche Fahrzeug zurücklegen soll, und/oder durch Übermittlung von Graddaten der Kurvenstärke anderer Recheneinheiten oder Sensoren und/oder auf Grundlage von übermittelten Knickwinkeln zwischen Maschinenteilen erfolgt und

- und eine näherungsweise Bestimmung der Ausbring-Sollmengen der Einzelausbringvorrichtungen auf Grundlage der näherungsweise bestimmten Kurvenstärke erfolgt,
- Eingeben der bestimmten/berechneten Ausbring-Sollmenge der Einzelausbringvorrichtung in eine Rechenmaschine des Fahrzeugs, und automatische Regelung durch die Rechenmaschine der Ausbring-Sollmenge an der Ausbringeinheit.

**8.** Verfahren nach Anspruch 7,
**dadurch gekennzeichnet, dass**
auf Grundlage der näherungsweise bestimmten Kurvenstärke, die Kurvenstärken der Einzelausbringungsvorrichtungen bestimmt werden.

**9.** Verfahren nach Anspruch 7 oder 8,
**dadurch gekennzeichnet, dass**
die Werte der näherungsweise bestimmten Ausbring-Sollmengen über einen definierten Zeitraum gemittelt werden.

**10.** Verfahren nach einem der Ansprüche 7 bis 9,
**dadurch gekennzeichnet, dass**
die Regelung der Ausbring-Sollmenge einer Einzelausbringvorrichtung über eine Verteileinheit erfolgt, wobei kurvenäußere Einzelausbringvorrichtungen einer größeren Ausbring-Sollmenge zugeordnet sind als kurveninnere Einzelausbringvorrichtungen.

**11.** Verfahren nach einem der Ansprüche 7 bis 10,
**dadurch gekennzeichnet, dass**
die Regelung der Ausbring-Sollmenge an der Einzelausbringvorrichtung durch Volumenflussverkleinerung oder -vergrößerung und/oder durch Intervallschaltung der Einzelausbringvorrichtung erfolgt.

**Claims**

**1.** A method for applying agricultural substances in curves by means of determining application target quantities of individual application devices of an application unit for applying agricultural substances, comprising the steps of:

- driving on an agricultural area with an agricultural vehicle having an application unit, wherein the application unit has at least two individual application devices,
- recognizing the driving in a curve with the agricultural vehicle via suitable sensors or capturing devices, **characterized by** the steps of:
- determining and calculating the curve radius ($R_F$) to be travelled by the vehicle center ($M_F$) via detecting the steering angle or by acceleration sensors or gyros,
- determining the curve radii ($R_A$) of each individual application device from the curve radius of the vehicle center

($M_F$) and an offset or distance ($O_G$) between the vehicle center ($M_F$) and the center of the application unit ($M_G$), and the offset or distance ($O_A$) between the center of the application unit ($M_G$) and the individual application device, and

- determining the application target quantity of an individual application device by means of an application target quantity of the agricultural vehicle that had been determined or calculated prior to processing an agricultural area,

and by means of curve radius values ($R_F$, $R_A$) of the individual application device and the vehicle center, and by inputting the determined/calculated application target quantity into a computer of the vehicle and automatically controlling the application target quantity on the application unit by the computer.

2. The method according to claim 1,
**characterized in that**
after determining the curve radii ($R_A$) of each individual application device, a determination of the relative speed of each individual application device is performed by means of the speed of the agricultural vehicle and the curve radius ($R_F$) of the vehicle center as well as the curve radii ($R_A$) of the respective individual application device, wherein the speeds of each individual application device and the agricultural vehicle are used for determining the application target quantity $S_A$ of an individual application device.

3. The method according to claim 1 or 2,
**characterized in that**
the determination of the curve radius ($R_F$) to be travelled by the vehicle center ($M_F$) is also performed based on an analysis of GPS data and/or based on an analysis of the positions of a target track the agricultural vehicle is intended to travel, and/or by a transmission of radius data of other computational units/sensors/agricultural machines and/or based on transmitted bend angles between machine parts.

4. The method according to any one of claims 1, 2 or 3,
**characterized in that**
the values of the determined application target quantities are averaged over a defined period of time.

5. The method according to any one of claims 1 to 4,
**characterized in that**
the control of the application target quantity of an individual application device is performed via a distributing unit, wherein individual application devices on an outside curve have assigned a higher application target quantity than individual application devices on an inside curve.

6. The method according to any one of claims 1 to 5,
**characterized in that**
the control of the application target quantity at the individual application device is performed by decreasing of increasing the volume flow and/or by intermittent operation of the individual application device.

7. A method for applying agricultural substances in curves by means of an approximate determination of application target quantities of individual application devices of an application unit for applying agricultural substances, comprising the steps of:

- driving on an agricultural area with an agricultural vehicle having an application unit, wherein the application unit has at least two individual application devices,
- recognizing the driving in a curve with the agricultural vehicle, **characterized in that**
- an approximative determination of the curve intensity and the curve direction to be travelled is performed,
- wherein the approximative determination is performed based on acceleration sensors and/or gyroscopes and/or gyros and/or based on an analysis of GPS date and/or based on an analysis of the positions of a target track the agricultural vehicle is intended to travel, and/or by a transmission of angle-related data of the curve intensity from other computational units or sensors and/or based on transmitted bend angles between machine parts,
- and an approximative determination of the application target quantities of the individual application devices is performed based on the approximately determined curve intensity,
- the determined/calculated application target quantity of the individual application device is input into a computer of the vehicle, and the application target quantity is automatically controlled by the computer at the application unit.

**8.** The method according to claim 7,
**characterized in that**
the curve intensities of the individual application devices are determined based on the approximately determined curve intensity.

**9.** The method according to claim 7 or 8,
**characterized in that**
the values of the approximately determined application target quantities are averaged over a defined period of time.

**10.** The method according to any one of claims 7 to 9,
**characterized in that**
the control of the application target quantity of an individual application device is performed via a distributing unit, wherein individual application devices on an outside curve have assigned a higher application target quantity than individual application devices on an inside curve.

**11.** The method according to any one of claims 7 to 10,
**characterized in that**
the control of the application target quantity at the individual application device is performed by decreasing of increasing the volume flow and/or by intermittent operation of the individual application device.

**Revendications**

**1.** Procédé pour épandre des matériaux agricoles dans des virages en déterminant des quantités d'épandage de consigne de dispositifs d'épandage individuels d'une unité d'épandage pour épandre des matériaux agricoles, comprenant les étapes suivantes consistant à :

- parcourir une surface agricole utile avec un véhicule agricole équipé d'une unité d'épandage, l'unité d'épandage comportant au moins deux dispositifs d'épandage individuels,
- reconnaître le parcours d'un virage avec le véhicule agricole par l'intermédiaire de capteurs ou de dispositifs d'enregistrement appropriés, **caractérisé par** les étapes suivantes consistant à :
- déterminer et calculer le rayon de virage ($R_F$) à parcourir du centre du véhicule ($M_F$) par la détection de l'angle de braquage ou par des capteurs d'accélération ou par un gyroscope,
- déterminer les rayons de virage ($R_A$) de chaque dispositif d'épandage individuel à partir du rayon de virage du centre du véhicule ($M_F$) et d'un décalage ou d'une distance ($O_G$) entre le centre du véhicule ($M_F$) et le centre de l'unité d'épandage ($M_G$) et du décalage ou de la distance ($O_A$) entre le centre de l'unité d'épandage et le dispositif d'épandage individuel, et
- déterminer la quantité d'épandage de consigne d'un dispositif d'épandage individuel sur la base d'une quantité d'épandage de consigne du véhicule agricole déterminée ou calculée avant de travailler une surface agricole, et sur la base des valeurs du rayon de virage ($R_F$, $R_A$) de chaque dispositif d'épandage individuel et du centre du véhicule, et par entrée de la quantité d'épandage de consigne déterminée/calculée dans une machine à calculer du véhicule et par la régulation automatique par l'intermédiaire de la machine à calculer de la quantité d'épandage de consigne au niveau de l'unité d'épandage.

**2.** Procédé selon la revendication 1,
**caractérisé en ce que**
après avoir déterminé les rayons de virage ($R_A$) de chaque dispositif d'épandage individuel, on détermine la vitesse relative de chaque dispositif d'épandage individuel en se basant sur la vitesse du véhicule agricole et sur le rayon de virage ($R_F$) du centre du véhicule et sur les rayons de virage ($R_A$) du dispositif d'épandage individuel respectif, en ayant recours aux vitesses de chaque dispositif d'épandage individuel et du véhicule agricole pour déterminer la quantité d'épandage de consigne $S_A$ d'un dispositif d'épandage individuel.

**3.** Procédé selon la revendication 1 ou 2,
**caractérisé en ce que**
on détermine le rayon de virage ($R_F$) à parcourir du centre de véhicule ($M_F$) en se basant également sur une analyse de données GPS et/ou en se basant sur une analyse des positions d'un tracé de consigne que doit parcourir le véhicule agricole et/ou par transfert de données de rayon d'autres unités de calcul/capteurs/machines agricoles et/ou en se basant sur des angles transférés de flexion entre des parties de machine.

**4.** Procédé selon l'une des revendications 1, 2 ou 3,
**caractérisé en ce que**
les valeurs des quantités d'épandage de consigne déterminées sont moyennées sur une période temporelle définie.

**5.** Procédé selon l'une des revendications 1 à 4,
**caractérisé en ce que**
la régulation de la quantité d'épandage de consigne d'un dispositif d'épandage individuel s'effectue par l'intermédiaire d'une unité de répartition, et une quantité d'épandage de consigne plus importante est associée aux dispositifs d'épandage individuels extérieurs en virage qu'aux dispositifs d'épandage individuels intérieurs en virage.

**6.** Procédé selon l'une des revendications 1 à 5,
**caractérisé en ce que**
la régulation de la quantité d'épandage de consigne au niveau du dispositif d'épandage individuel s'effectue par diminution ou augmentation du flux volumétrique et/ou par commutation à intervalles du dispositif d'épandage individuel.

**7.** Procédé pour épandre des matériaux agricoles dans des virages en déterminant par approximation les quantités d'épandage de consigne de dispositifs d'épandage individuels d'une unité d'épandage pour épandre des matériaux agricoles, comprenant les étapes suivantes consistant à :

- parcourir une surface agricole utile avec un véhicule agricole équipé d'une unité d'épandage, l'unité d'épandage comportant au moins deux dispositifs d'épandage individuels,
- reconnaître le parcours d'un virage avec le véhicule agricole,
**caractérisé en ce que**
- il est prévu une détermination par approximation de la courbure du virage à parcourir et de la direction du virage, la détermination par approximation s'effectuant sur la base de capteurs d'accélération et/ou de gyroscopes et/ou sur la base d'une analyse de données GPS et/ou sur la base d'une analyse des positions d'un tracé de consigne que doit parcourir le véhicule agricole, et/ou par transfert de données de gradient de la courbure du virage d'autres unités de calcul ou de capteurs et/ou sur la base d'angles transférés de flexion entre des parties de machine, et
- une détermination par approximation des quantités d'épandage de consigne des dispositifs d'épandage individuels s'effectue sur la base de la courbure du virage déterminée par approximation,
- entrer la quantité d'épandage de consigne déterminée/calculée du dispositif d'épandage individuel dans une machine de calcul du véhicule, et réguler automatiquement la quantité d'épandage de consigne par la machine de calcul au niveau de l'unité d'épandage.

**8.** Procédé selon la revendication 7,
**caractérisé en ce que**
en se basant sur la courbure du virage déterminée par approximation, on détermine les courbures de virage des dispositifs d'épandage individuels.

**9.** Procédé selon la revendication 7 ou 8,
**caractérisé en ce que**
les valeurs des quantités d'épandage de consigne déterminées par approximation sont moyennées sur une période temporelle définie.

**10.** Procédé selon l'une des revendications 7 à 9,
**caractérisé en ce que**
la régulation de la quantité d'épandage de consigne d'un dispositif d'épandage individuel s'effectue par l'intermédiaire d'une unité de répartition, des dispositifs d'épandage individuels extérieurs en virage étant associés à une quantité d'épandage de consigne plus importante que des dispositifs d'épandage individuels intérieurs en virage.

**11.** Procédé selon l'une des revendications 7 à 10,
**caractérisé en ce que**
la régulation de la quantité d'épandage de consigne au niveau d'un dispositif d'épandage individuel s'effectue par diminution ou augmentation du flux volumétrique et/ou par commutation à intervalles du dispositif d'épandage individuel.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060086295 A1
- EP 1415532 A1

- US 20030159633 A1